# FASCICULE DE BREVET EUROPEEN

(11) **EP 2 788 228 B1**
(45) Date de publication et mention de la délivrance du brevet: **09.09.2015**
(21) Numéro de dépôt: 12810348.8
(22) Date de dépôt: 05.12.2012
(51) Int. Cl.: B60R 16/03

(54) **PROCEDE DE GESTION DE L'ENERGIE ELECTRIQUE D'UN VEHICULE AUTOMOBILE ET VEHICULE AUTOMOBILE METTANT EN UVRE UN TEL PROCEDE**
VERFAHREN ZUR VERWALTUNG DER ELEKTRISCHEN ENERGIE EINES KRAFTFAHRZEUGS UND KRAFTFAHRZEUG MIT DIESEM VERFAHREN
METHOD OF MANAGING THE ELECTRICAL ENERGY OF A MOTOR VEHICLE AND MOTOR VEHICLE IMPLEMENTING SUCH A METHOD

(30) Priorité: 05.12.2011 FR 1161179
(43) Date de publication de la demande: 15.10.2014
(73) Titulaire: Peugeot Citroën Automobiles SA, 78140 Vélizy Villacoublay (FR)
(72) Inventeur: COMTE, Raphael, F-77380 Combs La Ville (FR); BELKHIRI, Abdeslam, F-92110 Clichy (FR); BOUCLY, Bernard, F-78150 Le Chesnay (FR)
(86) Numéro de dépôt international: PCT/FR2012/052809
(87) Numéro de publication internationale: WO 2013/083916

(56) Documents cités:
- EP-A1- 1 403 143
- DE-A1-102010 012 304
- DE-A1-102010 021 403

## Description

### Domaine technique de l'invention

La présente invention se rapporte à un procédé de gestion de l'énergie électrique d'une architecture électrique d'un véhicule automobile.

L'invention porte aussi sur un véhicule automobile mettant en oeuvre un tel procédé.

### Arrière-plan technologique

Certains réseaux d'alimentation en tension comprennent un générateur de tension et de courant, comme par exemple un alternateur et un stockeur d'énergie électrique (comme par exemple une batterie traditionnelle pour automobile), qui sont chargés d'alimenter en tension un ou plusieurs organes électriques de façon permanente ou commutée. C'est par exemple le cas des réseaux de bord de véhicule (éventuellement automobile). Dans une architecture classique le stockeur est directement connecté au générateur et au réseau de bord.

Ainsi, lorsque le véhicule est en fonctionnement moteur tournant, il y a en permanence des transferts énergétiques entre le générateur, le réseau de bord et le moteur. Ces transferts ont lieu dans les deux sens :
- Le générateur recharge le stockeur et fournit de l'énergie au réseau de bord,
- Le stockeur fournit une partie de son énergie au réseau de bord.

Par ailleurs, l'apparition des alternateurs pilotés pouvant avoir une tension de sortie modulée dans une plage en tension comprise entre une tension minimum et une tension maximum a conduit à élaborer des stratégies de modulation de la tension de sortie en vue d'obtenir un gain substantiel de consommation de véhicule. A cet effet, des phases de vie du véhicule permettant une récupération d'énergie telles que la vitesse du véhicule, la décélération du véhicule ont été prises en compte pour déterminer une tension de sortie adaptée dans la perspective de limiter au mieux la consommation du véhicule pendant chacune de ces phases.

En cour de fonctionnement du véhicule, lors de l'activation d'un consommateur électrique à forte consommation suite à une demande de prestation, celui-ci ayant une dynamique plus rapide que le temps de réponse générateur (par exemple un alternateur a un temps de réponse typique de 150 ms), le générateur n'a pas la capacité à fournir la puissance demandée.

Durant ce laps de temps, le stockeur qui est connecté en parallèle du générateur, sert de tampon et fournit la puissance à la prestation demandée durant cette phase transitoire. Le réseau de bord a alors une tension à ses bornes qui peut être inférieure à la tension minimale requise pour le bon fonctionnement de fonctions électriques.

Par ailleurs, l'alternateur a une capacité de production de'puissance limitée, qui est variable en fonction de différents paramètres, par exemple le régime moteur, sa température, la tension à ses bornes. De plus, le choix du générateur dans un véhicule automobile est un compromis entre son coût et sa puissance. En général, sa capacité de production est alors toujours inférieure au besoin maximal du réseau de bord.

Dans ces conditions, le générateur est souvent pour un régime moteur donné à une puissance maximum dite de saturation (on dit alors que le générateur est saturé) et dans ce cas, le stockeur fournit le complément de puissance au réseau de bord et la tension imposée sur le réseau de bord est celle du stockeur, ce qui dégrade l'état de charge de la batterie.

Dans le cas encore où le générateur est saturé et ne peut donc pas fournir la puissance nécessaire, le stockeur n'est alors plus seulement utilisé en tampon mais devient en plus le générateur qui impose la tension. De ce fait la tension risque alors d'être en dessous d'un seuil minimal admissible par le réseau de bord.

Dans une architecture électrique classique, le fait que le stockeur d'énergie électrique soit en permanence connecté à l'alternateur et au réseau de bord impose une forte dépendance sur les échanges énergétiques. Il en résulte des inconvénients:
- lors d'une phase de recharge du d'énergie électrique, l'alternateur augmente la tension de régulation permettant la recharge. Cependant le reste du réseau de bord est soumis à la même tension et par conséquent surconsomme. Par exemple lorsque l'alternateur impose une tension de 15V pour recharger le stockeur d'énergie électrique, tous les organes de type résistif ou moteur électrique vont se mettre à surconsommer une puissance électrique supplémentaire non nécessaire pour garantir la prestation et qui se traduit par une surconsommation en carburant et une augmentation du rejet de CO2. Par ailleurs, cette élévation de tension induit un vieillissement prématuré des composants du réseau de bord comme par exemple, les moyens d'éclairage ou encore les composants électroniques.
- Certains organes du réseau de bord peuvent, lorsqu'ils sont sollicités, imposer une tension de régulation minimum sur tout le réseau de bord. Par exemple un essuie-vitre, lorsqu'il est activé, a besoin d'une tension minimum de 14V à ses bornes pour garantir son fonctionnement optimal. Cette contrainte impose donc que l'alternateur régule à 14V générant ainsi une recharge forcée du stockeur d'énergie électrique qui n'est alors pas forcément souhaitée.

On connait de la demande de brevet déposée par la demanderesse sous le n° d'enregistrement FR1150072, un dispositif électronique formé d'un ensemble de convertisseur courant continu/ courant continu, encore dénommé convertisseur DC/DC réversible disposé dans une architecture électrique de véhicule automobile. Le convertisseur DC/DC comprend une entrée et une sortie et est connecté par l'entrée à un alternateur et par la sortie à une batterie. Le convertisseur DC/DC comprend quatre modes de fonctionnement :
- un mode passant : le convertisseur DC/DC se comporte comme un interrupteur fermé.
- un mode ouvert : le convertisseur DC/DC se comporte comme un interrupteur ouvert.
- un mode élévateur ou abaisseur de tension de la sortie par rapport à l'entrée pour un courant circulant dans le convertisseur DC/DC de l'entrée vers la sortie.
- un mode élévateur ou abaisseur de tension de l'entrée par rapport à la sortie pour un courant circulant dans le convertisseur DC/DC de la sortie vers l'entrée.

Les deux derniers modes de fonctionnement permettent d'obtenir une tension aux bornes de la batterie différente du reste du réseau de bord. Le document FR1150072 propose un exemple de stratégie de gestion de l'énergie électrique en phase de récupération d'énergie par déclenchement d'un mode prioritaire, cependant cette stratégie n'est pas forcément la meilleure à adopter dans la perspective de limiter au mieux la consommation du véhicule, tout en maintenant des prestations optimales des organes électriques de réseau de bord. On connait encore le document DE 102010021403 conforme au préambule de la revendication 1.

Il existe donc un besoin permanent d'amélioration de la stratégie de gestion de l'énergie électrique des architectures électriques de véhicule dans la perspective de limiter au mieux la consommation du véhicule, tout en conservant des prestations optimales des organes électriques de réseau de bord.

L'invention porte ainsi sur un procédé de gestion de l'énergie électrique d'une architecture électrique d'un véhicule automobile comprenant un stockeur d'énergie électrique, un réseau de bord comprenant des organes électriques, un générateur à tension de consigne continue modulable, un convertisseur DC/DC comprenant une entrée reliée au stockeur d'énergie électrique ainsi qu'une sortie reliée au réseau de bord, des moyens de contrôle permettant de piloter en courant et en tension le générateur, procédé dans lequel on détermine si le réseau de bord est sujet à une chute de tension due à l'activation d'un organe électrique sécuritaire du réseau de bord,
et caractérisé en ce que, la sortie du convertisseur DC/DC étant reliée au générateur et les moyens de contrôle permettant de piloter en courant et en tension le convertisseur DC/DC, dans l'affirmative,
- on détermine pour le convertisseur DC/DC une consigne de courant maximum, et égale à une fraction du courant requis par le réseau de bord, une consigne de tension à la sortie du convertisseur DC/DC supérieure à la tension délivrée par le générateur,
- on décharge le stockeur dans le réseau de bord en pilotant le convertisseur DC/DC aux consignes de courant maximum et de tension déterminées et le générateur à la tension de consigne égale à la tension requise par le réseau de bord, tant qu'une condition d'arrêt déterminée du pilotage du convertisseur DC/DC n'est pas atteinte.

Dans le cas où le réseau de bord n'est pas sujet à une chute de tension due à l'activation d'un organe électrique sécuritaire du réseau de bord, on détermine alors si le réseau de bord est sujet à une chute de tension due à l'activation d'un autre organe électrique du réseau de bord.

Dans le cas où le réseau de bord est sujet à une chute de tension due à l'activation d'un autre organe électrique du réseau de bord on vérifie si le convertisseur DC/DC (4) est dans un mode de fonctionnement passant.

Dans une variante, la condition d'arrêt est atteinte lorsque de manière cumulative on vérifie l'ensemble des conditions suivantes :
- une information indiquant que la tension de réseau de bord est satisfaisante,
- une information indiquant que le générateur impose sa consigne de tension au réseau de bord,
- une information indiquant que l'organe sécuritaire est désactivé,
- une information indiquant que la charge réseau du réseau de bord est satisfaisante.

De préférence, la condition d'arrêt est atteinte lorsque de manière alternative avec l'ensemble des conditions précédentes on vérifie qu'une information indiquant que la quantité d'énergie électrique du stockeur est insuffisante.

De préférence encore, la condition d'arrêt est atteinte lorsque de manière alternative l'ensemble des conditions précédentes et/ou l'information précédente, on vérifie qu'une information indiquant qu'une durée déterminée de pilotage du convertisseur DC/DC est atteinte.

De préférence, lorsque la condition d'arrêt est atteinte, on cesse de faire fonctionner le convertisseur DC/DC (par une réduction progressive de sa consigne de courant maximum.

De préférence encore, on régule la consigne de courant maximum de sorte à s'assurer que le générateur impose toujours sa tension de consigne au réseau de bord.

Dans une variante, le procédé comprend une étape préalable de demande de réveil et une étape finale de demande de veille.

L'invention a aussi pour objet un véhicule automobile équipé d'une architecture électrique comprenant un stockeur d'énergie électrique, un réseau de bord, un générateur à tension de consigne continue modulable, un convertisseur DC/DC comprenant une entrée reliée au stockeur d'énergie électrique ainsi qu'une sortie reliée au réseau de bord et au générateur, des moyens de contrôle permettant de piloter en courant et en tension le convertisseur DC/DC ainsi que le générateur, caractérisé en ce que les moyens sont configurés pour la mise en oeuvre du procédé de l'invention.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un véhicule automobile équipé d'une architecture électrique destinée à mettre en oeuvre le procédé de l'invention.
- La figure 2 est une représentation schématique d'un logigramme du procédé de l'invention.
- La figure 3a présente un signal d'activation d'un organe électrique sécuritaire et la figure 3b une évolution de la tension de réseau de bord en cas d'activation d'un organe électrique sécuritaire de la tension de réseau de bord avec (courbe 32) et sans (courbe 31) le procédé de l'invention.
- La figure 4 présente un exemple de logigramme dans lequel il est prévu de plus de vérifier que l'alternateur impose bien sa tension de consigne au réseau de bord et à défaut d'ajuster la consigne de courant maximum du convertisseur DC/DC en conséquence.

### Description détaillée

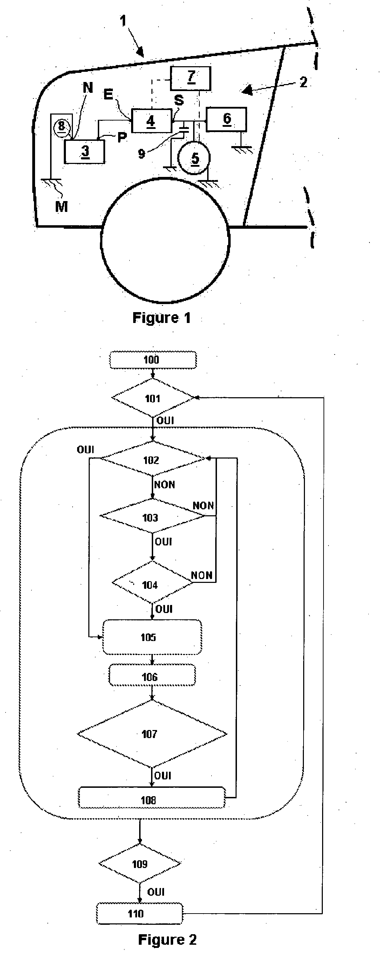

La figure 1 présente un véhicule automobile 1 équipé d'une architecture électrique 2 comprenant un réseau de bord 6 alimenté en courant continu. Le réseau de bord 6 regroupe des organes électriques sécuritaires et non sécuritaires se comportant comme des charges dans le véhicule, et tolérant des variations de tension d'alimentation dans une certaine plage, par exemple entre 10,5 V et 16 V lorsque celui-ci est alimenté électriquement. Parmi les principaux organes électriques considérés comme sécuritaires autrement dont le dysfonctionnement engage la sécurité des passagers du véhicule, on peut citer la direction assistée, le correcteur électronique de trajectoire, l'antiblocage de sécurité. Ces organes sécuritaires sont dits de forte puissance car ils ont un besoin de puissance important pouvant atteindre 1 kW électrique. D'autres organes électriques tel que l'éclairage extérieur du véhicule sont aussi considérés comme sécuritaires mais n'ont pas besoin de forte puissance. Parmi les principaux organes électriques considérés comme non sécuritaires, on peut citer par exemple l'éclairage intérieur du véhicule, l'ordinateur de bord, le groupe de climatisation.

L'architecture électrique 2 comprend également un générateur 5 à tension de consigne continue modulable, comme par exemple un alternateur 5 piloté dont la tension de consigne, U_{ConsAlt}, lorsque celui-ci est en fonctionnement, est peut être fixée entre un seuil minimum, par exemple de 12 V, et un seuil maximum, par exemple de 15 V. L'alternateur 5 délivre un courant continu. A cet effet, il comprend des moyens de redressement du courant. La tension de consigne de l'alternateur 5 est adaptée à la tension requise par le réseau de bord 6 pour son bon fonctionnement. L'alternateur 5 est directement relié au réseau de bord 6. Un condensateur de filtrage 9 peut avantageusement être placé en parallèle de l'alternateur 5. De préférence, la capacité de production électrique de l'alternateur 5 est inférieure au besoin électrique maximum requis par le réseau de bord 6 pour des raisons de compromis entre son coût et sa puissance.

L'architecture électrique 2 comprend encore un stockeur d'énergie électrique comme par exemple une batterie 3 très basse tension, telle qu'une batterie dite 12V au plomb. La tension que peut délivrer la batterie 3 est dépendante de son état de charge. Classiquement, la tension que peut délivrer la batterie 3 est comprise entre une tension minimum de l'ordre de 11,8 V lorsque son état de charge est faible, autrement dit environ 0% et une tension maximum de l'ordre de 12,8V pour une batterie dite de 12V, lorsque son état de charge est élevé, soit proche de 100%.

L'architecture électrique 2 comprend également un convertisseur continu/continu 4 (encore désigné ici comme convertisseur DC/DC) permettant d'alimenter le réseau de bord 6 à partir de la batterie 3. Le convertisseur continu/continu 4 comprend une borne d'entrée E et une borne de sortie S. La borne d'entrée E est raccordée à une borne positive P de la batterie 3. La batterie 3 comprend une borne négative N raccordée à une masse électrique M. La batterie 3 peut également être équipée d'un dispositif 8 disposé sur la borne négative N permettant de mesurer son état de charge. Le réseau de bord 6 est raccordé entre la borne de sortie S et la borne négative N de la batterie 3 par l'intermédiaire de la masse électrique M. L'alternateur 5 est aussi raccordé entre la borne de sortie S et la borne négative N de la batterie 3 par l'intermédiaire de la masse électrique M.

L'architecture électrique 2 comprend de plus des moyens de contrôle 7 assurant le pilotage du convertisseur DC/DC 4 et de l'alternateur 5.

Le convertisseur DC/DC 4 peut être piloté selon au moins les modes de fonctionnement suivants :
- un mode passant : le convertisseur DC/DC 4 se comporte comme un interrupteur fermé,
- un mode ouvert : le convertisseur DC/DC 4 se comporte comme un interrupteur ouvert,
- un mode élévateur ou abaisseur de tension de la sortie S par rapport à l'entrée E pour un courant circulant dans le convertisseur DC/DC 4 de l'entrée E vers la sortie S, ce qui permet de fournir du courant au réseau de bord 6.

Le convertisseur DC/DC 4 peut être un convertisseur DC/DC réversible, auquel cas il peut aussi être piloté selon le mode de fonctionnement suivant :
- un mode élévateur ou abaisseur de tension de l'entrée E par rapport à la sortie S pour un courant circulant dans le convertisseur DC/DC 4 de la sortie S vers l'entrée E, ce qui permet d'envoyer du courant vers la batterie et de la recharger.

Ces modes de fonctionnement permettent d'obtenir à volonté une tension coté batterie égale ou différente de la tension coté réseau de bord.

Ces modes de fonctionnement autorisent une gestion optimisée de l'énergie électrique de l'architecture électrique 2. Avec cette nouvelle gestion l'énergie électrique de l'architecture électrique 2, l'ensemble constitué de la batterie 3 et du convertisseur DC/DC 4 est utilisé en générateur d'énergie électrique en complément de l'alternateur 5 déjà présent dans le véhicule 1. Le réseau de bord 6 est alors alimenté par deux sources d'énergie électriques indépendantes.

L'intérêt d'utiliser l'ensemble batterie 3 - convertisseur DC/DC 4 comme d'un second générateur permet d'optimiser le rendement énergétique électrique du réseau de bord 6 du véhicule en exploitant l'énergie électrique emmagasinée dans la batterie 3. Cette énergie emmagasinée a un coût inférieur à celui que l'alternateur 5 prélève au moteur thermique puisqu'elle est récupérée de préférence lors de phases de récupération d'énergie où le moteur ne consomme pas de carburant.

L'alternateur 5 est la source principale d'énergie, il alimente le réseau de bord 6 dans la limite de ses capacités de production. Afin de fournir l'énergie électrique requise pour le bon fonctionnement du réseau de bord 6, il prélève typiquement du couple sur le moteur thermique. L'alternateur 5 est utilisé en générateur de courant régulé en tension, c'est-à-dire qu'il impose donc sa tension de consigne, U_{ConsAlt}, au réseau de bord 6.

L'ensemble batterie 3 - convertisseur DC/DC 4 est la source secondaire d'énergie électrique, il est utilisé pour réduire temporairement le couple prélevé sur le moteur thermique, donc la consommation de carburant. L'ensemble batterie 3 - convertisseur DC/DC 4 est utilisé en générateur de courant pur afin de ne pas imposer sa tension au réseau de bord 6.

Plus précisément, la figure 2 présente un logigramme de la procédure de l'invention dans lequel les étapes 100 et 110 correspondent respectivement aux étapes d'entrée et de sortie de ladite procédure.

En situation initiale (étape 100), le réseau de bord 6 est alimenté à une tension, U_{RdB} requise par le réseau de bord 6 égale à la tension de consigne U_{ConsAlt} de l'alternateur 5. Le réseau de bord 6 est alimenté à un courant I_{RdB} requis par les organes électriques activés du réseau de bord 6. Le convertisseur DC/DC 4 peut être dans l'un quelconque des modes précédemment décrits.

Par ailleurs, il peut être prévu une étape préalable 101 de demande de réveil au cours de laquelle on s'enquiert du besoin d'activer la procédure et une étape finale 109 de demande de veille au cours de laquelle on s'enquiert du besoin de désactiver la procédure.

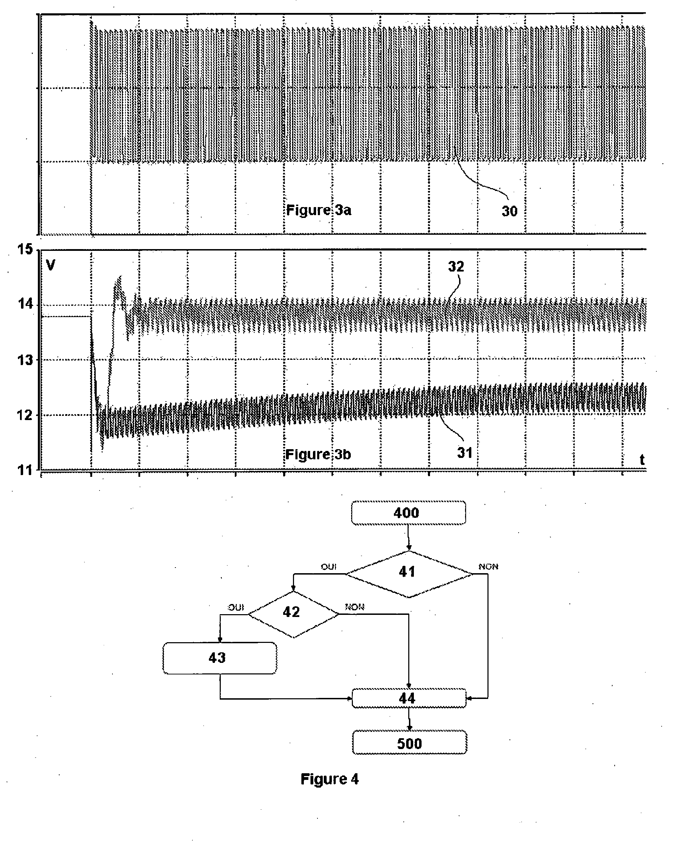

A l'étape 102, on détermine si le réseau de bord 6 est sujet à une chute de tension due à l'activation d'un organe électrique sécuritaire du réseau de bord 6. De préférence détermine à cette étape 102 si le réseau de bord 6 est sujet à une chute de tension due à l'activation d'un organe électrique sécuritaire de forte puissance. En effet, comme le montre la courbe 31 de la figure 3b, l'activation d'un organe électrique sécuritaire de forte puissance entraîne une brutale chute de tension sur le réseau de bord 6 que l'alternateur 5 seul ne permet pas de compenser de manière à garantir les prestations électriques du véhicule : le niveau de tension sur le réseau de bord chute sous 12V et reste dans cet exemple inférieur à 12,5 V. Une information relative à l'activation effective d'un organe électrique sécuritaire peut suffire à savoir si le réseau de bord 6 est sujet à une chute de tension si on admet que son activation implique systématiquement une chute de tension au niveau du réseau de bord. Il peut s'agir d'une information de tension minimum de réseau de bord U_{RdB} atteinte provoquant un fonctionnement dégradé d'une prestation électrique voire une perte de la fonction.

Dans l'affirmative, (branche OUI, partant de l'étape 102), on passe à l'étape 105 dans laquelle on détermine pour le convertisseur DC/DC 4 une consigne de courant maximum Iₘₐₓ, égale à une fraction du courant requis I_{Rdb} par le réseau de bord 6, une consigne de tension, U_{ConsDC} à la sortie S du convertisseur DC/DC 4 supérieure à la tension de consigne U_{ConsAlt} du générateur 5. La tension de consigne U_{ConsAlt} du générateur 5 correspond à la tension requise, U_{RdB}, par le réseau de bord 6.

La consigne de courant maximum, Iₘₐₓ, du convertisseur DC/DC 4 est limitée afin de maintenir un état de charge de la batterie 3 permettant de garantir l'ensemble des prestations électriques du véhicule. La consigne de courant maximum, Iₘₐₓ, du convertisseur DC/DC 4 est toujours inférieure au courant, I_{RDB}, consommé par le réseau de bord 6.

Pour des raisons de simplification de la gestion de la consigne de courant Iₘₐₓ, du convertisseur DC/DC 4 celle-ci peut être une consigne statique, par exemple 50% du courant maximum que peut fournir l'alternateur 5. En variante plus sophistiquée, on peut prévoir une consigne de courant maximum, Iₘₐₓ, dynamique, c'est-à-dire d'ajuster la consigne de courant maximum, Iₘₐₓ, en fonction de paramètres tels que par exemple l'état de charge de la batterie 3 et/ ou du besoin en courant du réseau de bord 6.

En choisissant une consigne de tension, U_{ConsDC}, en sortie S du convertisseur DC/DC 4 supérieure à la tension de consigne U_{ConsAlt} délivrée par l'alternateur 5, on s'assure que le convertisseur DC/DC 4 est utilisé en générateur de courant pur et que la tension de réseau de bord 6 est imposée par la tension de consigne de l'alternateur 5. Par générateur de courant pur on entend que l'on fournit un courant constant quelle que soit la valeur de la tension autrement dit, la tension de consigne, U_{ConsDC}, n'est jamais atteint car la consigne de courant Iₘₐₓ est inférieure à la consommation du réseau de bord)

On passe ensuite de l'étape 105 à l'étape 106, dans laquelle on décharge la batterie 3 dans le réseau de bord 6 en pilotant le convertisseur DC/DC 4 aux consignes de courant maximum Iₘₐₓ et de tension U_{ConsDC} déterminées et l'alternateur 5 à la tension U_{ConsAlt} égale à la tension, U_{RdB}, requise par le réseau de bord 6.

A la figure 3b, la courbe 32 présente la tension de réseau de bord 6 conséquemment à la mise en oeuvre de la procédure de l'invention. Dans ce cas, l'alternateur 5 maintient son fonctionnement et l'activation du convertisseur DC/DC 4 fournit avec la batterie 3 le complément de puissance. Comme de plus le convertisseur DC/DC 4 a un temps de réponse faible, typiquement inférieur à 1 milliseconde, il permet de rétablir plus rapidement qu'avec un changement classique de consigne de l'alternateur 5 un niveau de tension du réseau de bord 6 qui garantit les prestations électriques activées.

A l'étape 107 on vérifie que la condition d'arrêt déterminée du pilotage du convertisseur DC/DC 4 est atteinte.

De préférence, la condition d'arrêt déterminée du pilotage du convertisseur DC/DC 4 est atteinte lorsque de manière cumulative (autrement dit lié par un ET logique) on vérifie l'ensemble des conditions suivantes :
- une information indiquant que la tension de réseau de bord 6 est satisfaisante,
- une information indiquant que l'alternateur 5 impose bien sa consigne de tension, U_{ConsDC}, au réseau de bord 6, ainsi l'alternateur 5 est le régulateur de la tension du réseau de bord 6.
- une information indiquant que l'organe sécuritaire est désactivé,
- une information indiquant que la charge du réseau de bord 6 est satisfaisante. Cette information est jugée satisfaisante en particulier lorsque l'alternateur 5 n'est pas saturé.

De préférence encore, la condition d'arrêt déterminée du pilotage du convertisseur DC/DC 4 est atteinte lorsque de manière alternative (autrement dit lié par un OU logique) avec l'ensemble des conditions précitées on vérifie que :
- une information indiquant que la quantité d'énergie de la batterie 3 est insuffisante autrement dit inférieure à un seuil critique S_{c}. Le seuil critique d'énergie électrique, S_{c}, correspond à la quantité d'énergie électrique à maintenir dans la batterie 3 permettant de garantir l'ensemble des prestations électriques du véhicule, par exemple un démarrage après une période d'arrêt prolongée du véhicule. La quantité d'énergie électrique détenue par la batterie 3 peut être connue par exemple à partir de la détermination de grandeurs physiques représentatives, c'est-à-dire l'image d'une quantité d'énergie électrique telle que par exemple l'état de charge batterie.

De préférence encore, la condition d'arrêt déterminée du pilotage du convertisseur DC/DC 4 est atteinte lorsque de manière alternative (autrement dit lié par un OU logique) avec l'ensemble des conditions précitées et/ ou avec l'information précédente on vérifie que :
- une information indiquant qu'une durée T déterminée de pilotage du convertisseur DC/DC 4 est atteinte.

Ainsi, tant que la condition d'arrêt n'est pas atteinte, la procédure se poursuit. Lorsque la condition d'arrêt est atteinte, on passe à l'étape 108, dans laquelle on cesse d'appliquer les consignes de courant et de tension au convertisseur DC/DC 4. Avantageusement, afin d'éviter une nouvelle chute de tension due à un arrêt de fonctionnement total et brusque du convertisseur DC/DC 4 quand on cesse de lui appliquer les consignes qui pourrait intempestivement relancer la procédure, on cesse de faire fonctionner le convertisseur DC/DC 4 par une réduction progressive de sa consigne de courant maximum, Iₘₐₓ.

Suite à l'étape 102, dans la négative, c'est-à-dire si le réseau de bord 6 n'est pas sujet à une chute de tension due à l'activation d'un organe électrique sécuritaire du réseau de bord 6, on peut prévoir à l'étape 103 de vérifier si le réseau de bord 6 est sujet à une chute de tension due à l'activation d'un autre organe électrique. Les autres organes électriques du réseau de bord comprennent les organes électriques non sécuritaires et le cas échéants les organes électriques non sécuritaires s'ils ne sont pas testés à l'étape 102. Cette vérification peut se faire en particulier par la détection d'un fonctionnement du convertisseur DC/DC 4 en mode passant dans le cas où indépendamment de la procédure de l'invention il est prévu de piloter le convertisseur DC/DC 4 en mode passant en cas de chute de tension coté réseau de bord de sorte que le stockeur d'énergie électrique 3 vient temporairement en soutien de l'alternateur 5 pour alimenter le réseau de bord 6.

Dans le cas où le réseau de bord 6 est sujet à une chute de tension due à l'activation d'un autre organe électrique (branche OUI partant de l'étape 103), on passe à l'étape 104 dans laquelle on vérifie si la tension de réseau de bord 6 est inférieure à un seuil de tension critique, U_{c}. Le seuil de tension critique, U_{c}, correspond au seuil où la tension est insuffisante pour garantir les prestations électriques du véhicule ce qui conduite à un mode dégradé ou encore une perte de la fonction.

Dans l'affirmative, on est dans une situation où le fonctionnement en mode passant du convertisseur DC/DC ne suffit plus à soutenir l'alternateur 5 pour alimenter le réseau de bord 6. Il devient donc nécessaire de passer à l'étape 105.

Afin de limiter le passage intempestif à l'étape 105, on peut prévoir de filtrer le critère de déclenchement du passage de l'étape 104 à l'étape 105 en prenant en compte, en plus du seuil de tension critique, U_{c}, une durée critique, T_{c}, pendant laquelle la tension de réseau de bord 6 se doit d'être inférieure au seuil de tension critique, U_{c}, pour déclencher le passage à l'étape 105.

Cette mesure illustrée par les étapes 103 et 104 est plus économique en courant et permet de limiter l'application de l'étape 105 uniquement en cas de réel besoin et va donc dans le sens d'une optimisation de l'énergie électrique.

Dans une variante, il est prévu à l'étape de pilotage 106 de s'assurer que l'alternateur 5 impose toujours sa tension de consigne, U_{ConsAlt}, au réseau de bord 6. Dans le cas où l'alternateur 5 n'impose plus sa tension de consigne, U_{ConsAlt,} au réseau de bord 6, la consigne de courant maximum, Iₘₐₓ, du convertisseur DC/DC 4 est corrigée en conséquence.

Cette variante est illustrée à la figure 4 par un exemple de logigramme dans lequel les étapes 400 et 500 correspondent respectivement aux étapes d'entrée et de sortie de l'étape 106. A l'étape 41 on vérifie si la tension du réseau de bord 6 est supérieure à la tension de consigne, U_{ConsAlt,} de l'alternateur 5. Dans la négative, (branche NON partant de l'étape 41) on passe à l'étape de 44 où l'on applique les consignes de courant et de tension déterminées au convertisseur DC/DC 4. Dans l'affirmative, (branche OUI partant de l'étape 41), on vérifie à l'étape 42 si l'alternateur 5 produit un courant sensiblement nul. Dans l'affirmative, nous sommes dans une situation où c'est l'ensemble batterie 3 - convertisseur DC/DC 4 qui fonctionne en générateur de courant régulé en tension, ce que l'on ne souhaite pas. Dans ce cas, (branche OUI partant de l'étape 42), on procède à l'étape 43 à une réduction de la consigne de courant maximum, Iₘₐₓ, par décrémentation d'un pas de courant, dl, et à l'application à l'étape de 44 des consignes de courant et de tension déterminées de sorte que l'alternateur 5 devienne de nouveau le générateur imposant sa tension au réseau de bord 6. L'étape 42 peut comprendre une étape préalable de traitement de l'information courant, de sorte à filtrer les d'événements provoquant transitoirement un courant nul, comme par exemple une baisse de la consigne de tension de l'alternateur 5, mais qui ne sont pas représentatifs d'une situation où l'ensemble batterie 3-convertisseur DC/DC 4 fonctionne en générateur de courant régulé en tension et ainsi d'éviter de passer intempestivement à l'étape 43.

Dans une variante, l'alternateur 5 peut être remplacé par un autre générateur à tension de régulation continue et modulable entre une tension de consigne minimum et une tension de consigne maximum, du type convertisseur de courant DC/DC ou encore un alterno-démarreur.

Dans une autre variante, le stockeur d'énergie électrique peut également être du type condensateur ou supercondensateur.

Le procédé de l'invention permet de réduire la durée d'une phase transitoire de chute de tension et de répondre plus rapidement que dans une architecture électrique classique à une activation d'une fonction sécuritaire, en particulier de forte puissance. Le procédé de l'invention permet de garantir la ou les prestations électriques sécuritaires du véhicule ainsi que les prestations de confort ainsi que la qualité du réseau de bord, c'est-à-dire le niveau de tension d'alimentation de ces constituants électriques.

Cette invention permet aussi de réaliser un compromis entre réduction de carburant et garantie des prestations électriques du véhicule.

## Revendications

1. Procédé de gestion de l'énergie électrique d'une architecture électrique (2) d'un véhicule automobile (1) comprenant un stockeur d'énergie électrique (3), un réseau de bord (6) comprenant des organes électriques, un générateur (5) à tension de consigne (U_{ConsAlt}) continue modulable, un convertisseur DC/DC (4) comprenant une entrée (E) reliée au stockeur d'énergie électrique (3) ainsi qu'une sortie (S) reliée au réseau de bord (6), des moyens de contrôle (7) permettant de piloter en courant et en tension le générateur (5), procédé dans lequel on détermine si le réseau de bord (6) est sujet à une chute de tension due à l'activation d'un organe électrique sécuritaire du réseau de bord,
et **caractérisé en ce que**, la sortie (S) du convertisseur DC/DC (4) étant reliée au générateur (5) et les moyens de contrôle (7) permettant de piloter en courant et en tension le convertisseur DC/DC (4), dans l'affirmative,
- on détermine pour le convertisseur DC/DC (4) une consigne de courant maximum (Iₘₐₓ), et égale à une fraction du courant requis (I_{Rdb}) par le réseau de bord (6), une consigne de tension (U_{ConsDC}) à la sortie (S) du convertisseur DC/DC (4) supérieure à la tension (U_{ConsAlt}) délivrée par le générateur (5),
- on décharge le stockeur (3) dans le réseau de bord (6) en pilotant le convertisseur DC/DC (4) aux consignes de courant maximum (Iₘₐₓ) et de tension (U_{ConsDC}) déterminées et le générateur (5) à la tension de consigne (U_{ConsAlt}) égale à la tension (U_{RdB}) requise par le réseau de bord (6), tant qu'une condition d'arrêt déterminée du pilotage du convertisseur DC/DC (4) n'est pas atteinte.

2. Procédé selon la revendication 1, **caractérisé en ce que** si le réseau de bord (6) n'est pas sujet à une chute de tension due à l'activation d'un organe électrique sécuritaire du réseau de bord, on détermine alors si le réseau de bord (6) est sujet à une chute de tension due à l'activation d'un autre organe électrique du réseau de bord (6).

3. Procédé selon la revendication 2, **caractérisé en ce qu'**on détermine si le réseau de bord (6) est sujet à une chute de tension due à l'activation d'un autre organe électrique du réseau de bord (6) en vérifiant si le convertisseur DC/DC (4) est dans un mode de fonctionnement passant.

4. Procédé selon l'une quelconque des revendications précédentes, **caractérisé en ce que** la condition d'arrêt est atteinte lorsque de manière cumulative on vérifie l'ensemble des conditions suivantes :
- une information indiquant que la tension de réseau de bord (6) est satisfaisante,
- une information indiquant que le générateur (5) impose sa consigne de tension (U_{ConsDC}) au réseau de bord (6),
- une information indiquant que l'organe sécuritaire est désactivé,
- une information indiquant que la charge réseau du réseau de bord (6) est satisfaisante.

5. Procédé selon la revendication 4, **caractérisé en ce que** la condition d'arrêt est atteinte lorsque de manière alternative on vérifie qu'une information indiquant que la quantité d'énergie électrique du stockeur (3) est insuffisante.

6. Procédé selon la revendication 4 ou la revendication 5, **caractérisé en ce que** la condition d'arrêt est atteinte lorsque de manière alternative on vérifie qu'une information indiquant qu'une durée (T) déterminée de pilotage du convertisseur DC/DC (4) est atteinte.

7. Procédé selon l'une quelconque des revendications 4 à 6, **caractérisé en ce que** lorsque la condition d'arrêt est atteinte, on cesse de faire fonctionner le convertisseur DC/DC (4) par une réduction progressive de sa consigne de courant maximum (Iₘₐₓ).

8. Procédé selon l'une quelconque des revendications précédentes, **caractérisé en ce que** l'on régule la consigne de courant maximum (Iₘₐₓ) de sorte à s'assurer que le générateur (5) impose toujours sa tension de consigne (U_{ConsDC}) au réseau de bord (6).

9. Procédé selon l'une quelconque des revendications précédentes, **caractérisé en ce qu'**il comprend une étape préalable (101) de demande de réveil et une étape finale (109) de demande de veille.

10. Véhicule automobile (1) équipé d'une architecture électrique (2) comprenant un stockeur d'énergie électrique (3), un réseau de bord (6), un générateur (5) à tension de consigne (U_{ConsAlt}) continue modulable, un convertisseur DC/DC (4) comprenant une entrée (E) reliée au stockeur d'énergie électrique (3) ainsi qu'une sortie (S) reliée au réseau de bord (6) et au générateur (5), des moyens de contrôle (7) permettant de piloter en courant et en tension le convertisseur DC/DC (4) ainsi que le générateur (5), **caractérisé en ce que** les moyens (7) sont configurés pour la mise en oeuvre du procédé selon l'une des revendications précédentes.

## Patentansprüche

1. Verfahren zur Verwaltung der elektrischen Energie einer elektrischen Architektur (2) eines Kraftfahrzeugs (1), das einen Speicher elektrischer Energie (3), ein Bordnetzwerk (6), das elektrische Organe umfasst, einen Generator (5) mit modulierbarer Sollgleichspannung (U_{ConsAlt}), einen Gleichstrom-Gleichstrom-Wandler (4), der einen Eingang (E), der mit dem Speicher elektrischer Energie (3) verbunden ist, sowie einen Ausgang (S), der mit dem Bordnetzwerk (6) verbunden ist, Steuermittel (7), die es erlauben, den Strom und die Spannung des Generators (5) zu steuern, umfasst, Verfahren, bei dem bestimmt wird, ob das Bordnetzwerk (6) einem Spannungsabfall aufgrund der Aktivierung eines elektrischen Sicherheitsorgans des Bordnetzwerks unterliegt,
und **dadurch gekennzeichnet, dass**, da der Ausgang (S) des Gleichstrom-Gleichstrom-Wandlers (4) mit dem Generator (5) und den Steuermitteln (7), die es erlauben, den Strom und die Spannung des Gleichstrom-Gleichstrom-Wandlers (4) zu steuern, verbunden ist, falls ja
- für den Gleichstrom-Gleichstrom-Wandler (4) ein maximaler Stromsollwert (Iₘₐₓ) und gleich einem Bruchteil des für das Bordnetzwerk (6) erforderlichen Stroms (I_{Rdb}), ein Spannungssollwert (U_{ConsDC}) an dem Ausgang (S) des Gleichstrom-Gleichstrom-Wandlers (4) größer als die Spannung (U_{ConsAlt}), die von dem Generator (5) geliefert wird, bestimmt wird,
- der Speicher (3) in das Bordnetzwerk (6) entladen wird, indem der Gleichstrom-Gleichstrom-Wandler (4) auf die bestimmten maximalen Strom- (Iₘₐₓ) und Spannungssollwerte (U_{ConsDC}) gesteuert wird und der Generator (5) auf die Sollwertspannung (U_{ConsAlt}) gleich der Spannung (U_{RdB}), die für das Bordnetzwerk (6) erforderlich ist, solange eine bestimmte Stoppbedingung des Steuerns des Gleichstrom-Gleichstrom-Wandlers (4) nicht erreicht ist.

2. Verfahren nach Anspruch 1, **dadurch gekennzeichnet, dass**, falls das Bordnetzwerk (6) keinem Spannungsabfall aufgrund des Aktivierens eines elektrischen Sicherheitsorgans des Bordnetzwerks unterliegt, bestimmt wird, ob das Bordnetzwerk (6) einem Spannungsabfall aufgrund der Aktivierung eines anderen elektrischen Organs des Bordnetzwerks (6) unterliegt.

3. Verfahren nach Anspruch 2, **dadurch gekennzeichnet, dass** bestimmt wird, ob das Bordnetzwerk (6) einem Spannungsabfall aufgrund der Aktivierung eines anderen elektrischen Organs des Bordnetzwerks (6) unterliegt, indem geprüft wird, ob der Gleichstrom-Gleichstrom-Wandler (4) in einem durchgängigen Betriebsmodus ist.

4. Verfahren nach einem der vorhergehenden Ansprüche, **dadurch gekennzeichnet, dass** die Stoppbedingung erreicht ist, wenn summierend sämtliche folgende Bedingungen zutreffen:
- eine Information, die angibt, dass die Spannung des Bordnetzwerks (6) zufriedenstellend ist,
- eine Information, die angibt, dass der Generator (5) seinen Spannungssollwert (U_{ConsDC}) dem Bordnetzwerk (6) auferlegt,
- eine Information, die angibt, dass das Sicherheitsorgan deaktiviert ist,
- eine Information, die angibt, dass die Netzlast des Bordnetzwerks (6) zufriedenstellend ist.

5. Verfahren nach Anspruch 4, **dadurch gekennzeichnet, dass** die Stoppbedingung erreicht ist, wenn alternativ eine Information, die angibt, dass die Menge an elektrischer Energie des Speichers (3) unzureichend ist, zutrifft.

6. Verfahren nach Anspruch 4 oder 5, **dadurch gekennzeichnet, dass** die Startbedingung erreicht ist, wenn alternativ zutrifft, dass eine Information angibt, dass eine bestimmte Steuerdauer (T) des Gleichstrom-Gleichstrom-Wandlers (4) erreicht ist.

7. Verfahren nach einem der Ansprüche 4 bis 6, **dadurch gekennzeichnet, dass**, wenn die Startbedingung erreicht ist, der Betrieb des Gleichstrom-Gleichstrom-Wandlers (4) durch eine allmähliche Verringerung seines maximalen Stromsollwerts (Iₘₐₓ) gestoppt wird.

8. Verfahren nach einem der vorhergehenden Ansprüche, **dadurch gekennzeichnet, dass** der maximale Stromsollwert (Iₘₐₓ) derart geregelt wird, dass sichergestellt ist, dass der Generator (5) dem Bordnetzwerk (6) immer seinen Spannungssollwert (U_{ConsDC}) auferlegt.

9. Verfahren nach einem der vorhergehenden Ansprüche, **dadurch gekennzeichnet, dass** es einen vorausgehenden Weckanfrageschritt (101) und einen abschließenden Standby-Anfrageschritt (109) umfasst.

10. Kraftfahrzeug (1), das mit einer elektrischen Architektur (2) ausgestattet ist, die einen elektrischen Speicher (3), ein Bordnetzwerk (6), einen Generator (5) mit modulierbarer Gleichstrom-Sollspannung (U_{ConsAlt}), einen Gleichstrom-Gleichstrom-Wandler (4), der einen Eingang (E), der mit dem Speicher elektrischer Energie (3) verbunden ist, sowie einen Ausgang (S), der mit dem Bordnetzwerk (6) und dem Generator (5) verbunden ist, Steuermittel (7), die es erlauben, den Strom und die Spannung des Gleichstrom-Gleichstrom-Wandlers (4) sowie des Generators (5) zu steuern, umfasst, **dadurch gekennzeichnet, dass** die Mittel (7) zur Umsetzung des Verfahrens nach einem der vorhergehenden Ansprüche ausgelegt sind.

## Claims

1. A method of managing the electrical energy of an electrical architecture (2) of a motor vehicle (1) including a storer of electrical energy (3), an on-board network (6) including electrical members, an adjustable setpoint direct voltage (U_{ConsAlt}) generator (5), a DC/DC converter (4) including an input (E) connected to the electrical energy storer (3) and an output (S) connected to the on-board network (6), control means (7) permitting the generator (5) to be driven in current and in voltage, in which method it is determined whether the on-board network (6) is subject to a voltage drop due to the activation of a security electrical member of the on-board nework,
and **characterized in that**, the output (S) of the DC/DC converter (4) being connected to the generator (5) and the control means (7) permitting the DC/DC converter (4) to be driven in current and in voltage, if so,
- there is determined for the DC/DC converter (4) a setpoint of maximum current (Iₘₐₓ), and equal to a fraction of the required current (I_{Rdb}) by the on-board network (6), a setpoint of voltage (U_{ConsDC}) at the output (S) of the DC/DC converter (4) greater than the voltage (U_{ConsAlt}) delivered by the generator (5),
- the storer (3) is discharged in the on-board network (6) by driving the DC/DC converter (4) at the determined setpoints of maximum current (Iₘₐₓ) and of voltage (U_{ConsDC}) and the generator (5) at the setpoint voltage (U_{ConsAlt}) equal to the voltage (U_{RdB}) required by the on-board network (6), as long as a determined stop condition of the driving of the DC/DC converter (4) is not reached.

2. The method according to claim 1, **characterized in that** if the on-board network (6) is not subject to a voltage drop due to the activation of a security electrical member of the on-board network, it is then determined whether the on-board network (6) is subject to a voltage drop due to the activation of another electrical member of the on-board network (6).

3. The method according to claim 2, **characterized in that** it is determined whether the on-board network (6) is subject to a voltage drop due to the activation of another electrical member of the on-board network (6) by verifying if the DC/DC converter (4) is in a pass-through mode of operation.

4. The method according to any one of the preceding claims, **characterized in that** the stop condition is reached when, in a cumulative manner, the whole of the following conditions are verified:
- information indicating that the voltage of the on-board network (6) is satisfactory,
- information indicating that the generator (5) imposes its voltage setpoint (U_{ConsDC}) on the on-board network (6),
- information indicating that the security member is deactivated,
- information indicating that the network load of the on-board network (6) is satisfactory.

5. The method according to claim 4, **characterized in that** the stop condition is reached when, in an alternative manner, it is verified that an information indicating that the amount of electrical energy of the storer (3) is insufficient.

6. The method according to claim 4 or 5, **characterized in that** the stop condition is reached when, in an alternative manner, it is verified that an information indicating that a determined duration (T) of driving of the DC/DC converter (4) is reached.

7. The method according to any one of claims 4 to 6, **characterized in that** when the stop condition is reached, the DC/DC converter (4) is stopped from being operated by a progressive reduction of its setpoint of maximum current (Iₘₐₓ).

8. The method according to any one of the preceding claims, **characterized in that** the setpoint of maximum current (Iₘₐₓ) is regulated so as to ensure that the generator (5) always imposes its setpoint voltage (U_{ConsDC}) on the on-board network (6).

9. The method according to any one of the preceding claims, **characterized in that** it includes a prior wake-up request step (101) and a final sleep request step (109).

10. A motor vehicle (1) equipped with an electrical architecture (2) including a storer of electrical energy (3), an on-board network (6), an adjustable setpoint direct voltage (U_{ConsAlt}) generator (5), a DC/DC converter (4) including an input (E) connected to the electrical energy storer (3) and an output (S) connected to the on-board network (6) and to the generator (5), control means (7) permitting the DC/DC converter (4) and the generator (5) to be driven in current and in voltage, **characterized in that** the means (7) are configured for the implementation of the method according to one of the preceding claims.
